# EUROPÄISCHE PATENTSCHRIFT

(11) **EP 1 044 174 B1**
(45) Veröffentlichungstag und Bekanntmachung des Hinweises auf die Patenterteilung: **07.05.2003**
(21) Anmeldenummer: 98965775.4
(22) Anmeldetag: 07.12.1998
(51) Int. Cl.: C03C 8/14, C03C 14/00, C03C 17/04, F24J 2/50

(54) **TRANSPARENTES MEDIUM MIT WINKELSELEKTIVEN TRANSMISSIONS- BZW. REFLEXIONSEIGENSCHAFTEN**
TRANSPARENT MEDIUM WITH ANGULAR-SELECTIVE TRANSMITTING OR REFLECTING PROPERTIES
MILIEU TRANSPARENT PRESENTANT DES PROPRIETES DE TRANSMISSION OU DE REFLEXION A SELECTIVITE ANGULAIRE

(30) Priorität: 17.12.1997 DE 19756037
(43) Veröffentlichungstag der Anmeldung: 18.10.2000
(73) Patentinhaber: MERCK PATENT GmbH, 64293 Darmstadt (DE)
(72) Erfinder: SCHANK, Christina, D-64367 Mühltal (DE); PFAFF, Gerhard, D-64839 Münster (DE); BROWNFIELD, Alexandra, Miland Park, NY 07432 (US); WEITZEL, Joachim, D-64293 Darmstadt (DE); HECHLER, Wolfgang, D-64686 Lautertal (DE)
(86) Internationale Anmeldenummer: EP9807933
(87) Internationale Veröffentlichungsnummer: WO99031023

(56) Entgegenhaltungen:
- EP-A- 0 578 829
- EP-A- 0 727 306
- GB-A- 2 012 943
- US-A- 2 812 691
- US-A- 3 085 473
- US-A- 3 453 039
- US-A- 4 089 594
- US-A- 4 353 991
- US-A- 4 519 675
- US-A- 5 650 875
- US-A- 5 747 153
- PATENT ABSTRACTS OF JAPAN vol. 097, no. 008, 29. August 1997 & JP 09 104774 A (BANPOO KOGYO KK), 22. April 1997
- PATENT ABSTRACTS OF JAPAN vol. 017, no. 524 (M-1483), 21. September 1993 & JP 05 138833 A (KURARAY CO LTD), 8. Juni 1993
- PATENT ABSTRACTS OF JAPAN vol. 017, no. 406 (C-1090), 29. Juli 1993 & JP 05 078544 A (KURARAY CO LTD), 30. März 1993
- PATENT ABSTRACTS OF JAPAN vol. 014, no. 188 (C-0710), 17. April 1990 & JP 02 034589 A (TOYODA GOSEI CO LTD;OTHERS: 01), 5. Februar 1990
- PATENT ABSTRACTS OF JAPAN vol. 014, no. 186 (M-0962), 16. April 1990 & JP 02 034331 A (TOYODA GOSEI CO LTD), 5. Februar 1990

## Beschreibung

Die Erfindung betrifft den Einsatz von funktionellen Perlglanzpigmenten in transparenten Medien, die sich dadurch auszeichnen, daß sie winkelselektive Transmissions- bzw. Reflexionseigenschaften aufweisen.

Die transparente Wärmedämmung (TWD) ist eine Technologie zur solaren Raumheizung. Hierbei handelt es sich um Materialien, die eine niedrige Wärmeleitfähigkeit mit einem hohen Transmissionsgrad für Solarstrahlung verbinden. Bei einer transparent wärmegedämmten Außenwand befindet sich ein TWD-Element vor einer massiven Wand, auf die eine schwarze Absorberschicht aufgebracht ist. Durch dieses System wird die einfallende Sonnenenergie von der Außenseite einer Fassade durch ein Glasröhrchensystem gelenkt, auf den Mauerbildner gebracht und in Wärme umgewandelt. Die zur Zeit eingesetzten TWD-Systeme liefern zwar eine gute Wärmedämmung und auch Energiegewinnung im Winter, führen jedoch aufgrund ihrer Funktionsweise im Sommer zu Überhitzungen der Mauer und zu unangenehmen Innenwandtemperaturen, sofern keine mechanischen Abschattungssysteme, wie z. B., Rollos, Jalousien, Lamellen, Ablüfter, etc. zur Verfügung stehen. Die zur Absorption der Energie erforderlichen schwarzen Absorberschichten stellen zudem eine dekorative Einschränkung bei der Gestaltung von Fassaden dar.

Gebäudefassaden wurden bisher nur als Dekorationsflächen angesehen, die Betrachtung von Fassaden als nutzbare Funktionsflächen bei der Wärmedämmung läßt beträchtliche Fortschritte bei der Isolierung bzw. Erwärmung von Gebäuden erwarten, was einer Ressourcenschonung gleichkommt.

Die Sonne ist eine unerschöpfliche umweltfreundliche Energiequelle, die uns ein Potential an Energie zur Heizung von Gebäuden zur Verfügung stellt. Insgesamt wird viermal mehr Energie auf ein Gebäude gestrahlt als im Inneren an Heizenergie verbraucht wird.

Die auf eine Gebäudefassade auftreffende Sonnenstrahlung ändert ihren Einfallswinkel abhängig von der Tageszeit und von der Jahreszeit (Winter/Sommer). Im Winter beträgt der Einfallswinkel auf eine südorientierte Fassade bei höchstem Sonnenstand (12.00 Uhr) ca. 12 °, im Sommer dagegen ca. 68 ° in Deutschland (abhängig vom Breitengrad).

Aufgabe der vorliegenden Erfindung ist es nun, Gebäudefassaden nicht nur als Dekorationsflächen zu nutzen, sondern diese Fassaden auch als Funktionsflächen in die Regulierung der Wärmebilanz eines Gebäudes einzubeziehen.

Perlglanzpigmente finden nicht länger nur durch ihre Farbgebung Interesse, sondern gelangen zunehmend in funktionellen Bereichen zum Einsatz. Perlglanzpigmente zeigen im sichtbaren Wellenlängenbereich selektive Reflexion bzw. Transmission, Eigenschaften, die für den Farbeindruck verantwortlich sind. Diese wellenlängenabhängige Reflexion bzw. Transmission läßt sich auf den nahen Infrarotbereich ausdehnen und wird zum Teil bei Agrarfolien genutzt. Zum anderen zeigen Perlglanzpigmente abhängig vom Einfallswinkel der auftreffenden Strahlung unterschiedliche Reflexion bzw. Transmission.

Ein völlig neuer funktioneller Einsatzbereich für Perlglanzpigmente sollte somit im Bausektor bei der Fassadengestaltung zu finden sein.

Überraschenderweise wurde nun gefunden, daß transparente Medien enthaltend funktionelle Perlglanzpigmente auf Basis von plättchenförmigen Substraten aufgebracht z. B. auf eine Fassadenoberfläche zu einer winkelselektiven Abschattung des Gebäudes führen.

Die sogenannten funktionellen Pigmente haben die Eigenschaft, daß ihre Reflexion im sichtbaren Spektralbereich unter nahezu senkrechtem Einfallswinkel (d. h. bis zu ca. 12 ° Abweichung von der Senkrechten, dies entspricht den Verhältnissen im Winter) gering, unter flachem Einfallswinkel (d. h. bis zu ca. 68 ° Abweichung von der Senkrechten, dies entspricht den Verhältnissen im Sommer) dagegen groß ist.

Bei entsprechender Applikation dieser funktionellen Pigmente auf eine Fassade kann im Winter eine Transmission der Sonnenstrahlung, d. h. Erwärmung der Fassade, im Sommer dagegen eine Reflexion der Sonnenstrahlung, d. h. Verschattung der Fassade, erreicht werden.

Gegenstand der Erfindung sind somit transparente Medien enthaltend Perlglanzpigmente auf Basis plättchenförmiger Substrate mit winkelselektiven Reflexions- bzw. Transmissionseigenschaften, dadurch gekennzeichnet, daß das Verhältnis aus dem solaren Transmissionsgrad im Sommer (Einfallswinkel der Sonnenstrahlung 55 bis 70 °) und dem solaren Transmissionsgrad im Winter (Einfallswinkel der Sonnenstrahlung 5 bis 20 °) im Bereich von 50-85 % liegt.

Die winkelselektiven Eigenschaften der funktionellen Pigmente in den transparenten Medien konzentrieren sich auf den Spektralbereich der Sonnenstrahlung, d. h., 0,25 bis 2,5 µm. In diesem Wellenlängenbereich kann der gerichtet-hemisphärische Transmissions- und Reflexionsgrad z. B. an Glasträgern, auf denen die funktionellen Pigmente appliziert sind, gemessen werden. Aus diesen gemessenen gerichtet-hemisphärischen Transmission- und Reflexionsgraden lassen sich durch Wichten mit dem solaren Spektrum bzw. der Hellempfindlichkeit des menschlichen Auges solare bzw. visuelle Transmissions- und Reflexionsgrade gemäß DIN 67507 berechnen.

Aus der DE-A-195 01 114 ist ein Verfahren bekannt, das die im Winter vorhandene direkte und diffuse Sonneneinstrahlung durch einfache Maßnahmen positiv in die Wärmebilanz eines Hauses einbezieht. Im Stand der Technik wird ein Anstrichstoff beschrieben, der im sichtbaren Bereich des elektromagnetischen Spektrums reflektierend und im nahen Infrarotbereich mit Hilfe eines Pigmentgemisches absorbierend eingestellt werden kann. Im Gegensatz zu der vorliegenden Erfindung wirkt sich in der DE-A-195 01 114 nur die im Winter vorhandene Sonneneinstrahlung positiv in der Wärmebilanz eines Hauses aus. Nachteilig hierbei ist jedoch, daß durch die in Frühjahr, Sommer und Herbst viel intensivere Sonneneinstrahlung eine Überhitzung des Hauses auftreten kann, der nur durch Ablüften zu begegnen ist. Das erfindungsgemäß pigmentierte transparente Medium macht es sich zur Aufgabe, nicht nur die Sonneneinstrahlung im Winter zu nutzen, sondern auch Gebäude vor der sommerlichen Überhitzung zu schützen.

In der vorliegenden Erfindung kommen als funktionelle Pigmente alle dem Fachmann bekannten Perlglanzpigmente in Frage, die winkelselektive Reflexions- bzw. Transmissionseigenschaften aufweisen und deren Verhältnis aus dem solaren Transmissionsgrad im Sommer (Einfallswinkel der Sonnenstrahlung 55 bis 70 °) und dem solaren Transmissionsgrad im Winter (Einfallswinkel der Sonnenstrahlung 5 bis 20 °) im Bereich von 50 bis 85 % liegt, vorzugsweise kleiner 80 % und insbesondere bei höchstens 75 % liegt.

Zur Unterstützung der winkelselektiven Transmissions- bzw. Reflexionseigenschaften der funktionellen Perlglanzpigmente empfiehlt es sich die plättchenförmigen Pigmente auf einen strukturierten Untergrund aufzubringen, der wiederum die Orientierung der Plättchen vorgibt. Bei entsprechender Ausrichtung der Pigmentplättchen wird der winkelselektive Effekt wirkungsvoll verstärkt. Die Strukturierung läßt sich beispielsweise errreichen, indem das pigmentierte transparente Medium auf ein Prägefolie aufgebracht wird oder das transparente Medium selbst geprägt wird.

Die winkelselekiven Eigenschaften der funktionellen Pigmente kommen im transparenten Medium nur zum Ausdruck, wenn das Pigment in Mengen von 5 bis 70 Gew.%, vorzugsweise 10 bis 50 Gew.%, insbesondere 30 bis 40 Gew.% eingesetzt wird. Die Einsatzkonzentration ist allerdings abhängig vom verwendeten transparentem Medium.

Bevorzugte funktionelle plättchenförmige Pigmente sind auf der Basis von Metalloxidplättchen, wie z.B. aus Eisenoxiden oder Aluminiumoxid, von Schichtsilikaten wie etwa natürlicher oder synthetischer Glimmer, Talkum, Kaolin, SiO₂-Flakes, Glas oder anderen silikatischen Materialien, welche mit einer oder mehrerer Metalloxidschichten überzogen sind. Als Metalloxide werden dabei sowohl farblose hochbrechende Metalloxide, wie z. B. Titandioxid oder Zirkoniumdioxid, verwendet, als auch farbige Metalloxide, wie z. B. Chromoxid, Nickeloxid, Kupferoxid, Kobaltoxid und insbesondere Eisenoxide, wie z. B. Fe₂O₃ oder Fe₃O₄. Diese plättchenförmigen Pigmente sind bekannt und sind größtenteils kommerziell erhältlich und/oder können nach dem Fachmann bekannten Standardverfahren hergestellt werden. Geeignete Perlgtanzpigmente sind z. B. beschrieben in den deutschen Patenten und Patentanmeldungen 14 67 468, 19 59 998, 20 09 566, 22 14 454, 22 15 191, 22 44 298, 23 13 331, 25 22 572, 31 37 808, 31 37 809, 31 51 343, 31 51 354, 31 51 355, 32 11 602 und 32 35 017. Funktionelle Pigmente auf Basis von SiO₂-Flakes hergestellt nach dem Bandverfahren sind z. B. Gegenstand der WO 93/08237. Mehrschichtige Pigmente sind insbesondere beschrieben in DE-A-42 38 378, DE-A-196 18 563, DE-A-196 18 566 und DE-A-196 569. Die funktionellen Pigmente können auch zur Erhöhung der Temperatur- und Witterungsbeständigkeit nachbeschichtet sein. Weiterhin können auch Effektpigmente auf der Basis von Flüssigkristallpolymeren (LCP's) eingesetzt werden.

Besonders bevorzugt werden als funktionelle Perlglanzpigmente elektrisch leitfähige Pigmente eingesetzt, wie sie z. B. aus der DE-OS 38 42 330, DE-OS-42 12 950 und der EP 0 139 557 bekannt sind. Diese Pigmente weisen vorzugsweise eine mit Antimon, Indium, Bismut, Kupfer, Gallium, Germanium oder Fluor, insbesondere Antimon, dotierte Zinndioxidschicht auf. Derartige Pigmente sind z. B. unter dem Handelsnamen Minatec® (hergestellt von der Fa. Merck KGaA, BRD) erhältlich.

Das erfindungsgemäße transparente Medium kann auch ein Gemisch von unterschiedlichen funktionellen Pigmenten enthalten, da vielfach durch die Verwendung von mindestens zwei verschiedenen Pigmenten besondere Effekte erzielt werden können. Die Pigmente sind dann in jedem Verhältnis mischbar, der Gesamtgehalt aller funktionellen Pigmente im transparenten Medium sollte allerdings 70 Gew.% nicht überschreiten.

Geeignete transparente Medien sind insbesondere Glas, Lacke, Wasserlacke, Kunststoffe, insbesondere Kunststoffolien. Vorzugsweise ist das transparente Medium Glas oder ein transparentes Polymer.

Als Bindemittel werden übliche Lackbindemittel, wie z.B. Polyurethan-Acrylat-Harze, Acrylat-Melamin-Harze, Alkydharze, Polyesterharze und Epoxidharze, Kohlenwasserstoffharze, Nitrocellulose, Nitrocellulose-Derivate, Celluloseacetopropinat, -butyrat, Ketonharze, Aldehydharze, Polyvinylbutyral, α-Methylstyrol-Acrylnitril-Copolymere, Polyesterimid, Acrylatharz auf der Basis von Acrylsäurebutylester, Polyacrylsäureester, insbesondere Polyacrylsäurebutylester, eine wäßrige Dispersion auf Polyethylenbasis, eine wäßrige Dispersion auf Polyethylenoxidatbasis, eine wäßrige Dispersion auf der Basis von Ethylen-Acrylsäure-Copolymeren, eine wäßrige Dispersion auf Methacrylatbasis, auf Acrylat/Styrol-Basis, ein Vinylpyrrolidon-Vinylacetat-Copolymeres, oder aber eine Mischung der genannten Dispersionen und Bindemittel, eingesetzt.

Die Formulierung wird in der Regel hergestellt, indem das funktionelle Pigment vorgelegt und mit dem Bindemittel und eventuellen nicht deckenden Zusätzen homogen vermischt wird. Der pigmentierte Lack kann anschließend z. B. auf Glasplatten, Aluminium- oder Stahlbleche z.B. durch Tauchen, Pinseln, Rakeln, Drucken, etc., appliziert werden. Weiterhin kann auch das funktionelle Pigment bzw. Pigmentgemisch in trockener Form auf einen Träger, z. B. einen thermoplastischer Kunststoff, aufgebracht werden. Der Träger wird dann aufgeschmolzen und das Pigment verteilt sich homogen im transparenten Medium.

Als transparentes Medium kommen weiterhin alle dem Fachmann bekannten thermoplastischen Kunststoffe, wie sie z. B. im Ullmann, Bd. 15, S. 457 ff., Verlag VCH beschrieben werden in Frage. Geeignete Kunststoffe sind z.B. Polyethylen, Polypropylen, Polyamide, Polyester, Polyesterester, Polyetherester, Polyphenylenether, Polyacetat, Polybutylenterephthalat, Polymethylmethacrylat, Polyvinylacetal, Polystyrol, Polyurethane, Acrylnitril-Butadien-Styrol (ABS), Acrylnitril-Styrol-Acrylester (ASA), Polycarbonat, Polyethersulfone, Polyetherketone sowie deren Copolymere und/oder Mischungen.

Die Einarbeitung der funktionellen Pigmente in den Kunststoff erfolgt, indem das Kunststoffgranulat mit dem Pigment gemischt und dann unter Wärmeeinwirkung verformt wird. Die Herstellung der Kunststoffgranulat/-Pigment-Mischung erfolgt in der Regel so, daß in einem geeigneten Mischer das Kunststoffgranulat vorgelegt, mit eventuellen Zusätzen benetzt und danach das Pigment zugesetzt und untergemischt wird. Die Pigmentierung des Kunststoffs erfolgt in der Regel über ein Farbkonzentrat (Masterbatch) oder Compound. Die so erhaltene Mischung kann dann direkt in einem Extruder oder einer Spritzgießmachine verarbeitet werden. Die bei der Verarbeitung gebildeten Formkörper, wie z. B. Kunststoffplatten, zeigen eine sehr homogene Verteilung des Pigments.

Weiterhin können die Pigmente in Glas oder Keramiken eingebracht werden. In diesem Fall werden die Perlglanzpigmente schonend mit den Glas- bzw. Keramikfritten gemischt, das Pulvergemisch auf einen Träger aufgebracht und für 5-20 min, bei Temperaturen von 400-1100 °C, vorzugsweise bei 400-850 °C, gebrannt.

Das erfindungsgemäße Medium kann auf beliebige Substratmaterialien, beispielsweise Metallen wie z.B. Eisen, Stahl, Aluminium, Kupfer, Bronze, Messing sowie Metallfolien, aber auch metallüberzogenen Oberflächen von Glas, Keramik, Beton, Verpackungsmaterialien, Folien oder auf anderen Materialien zu abschattenden und gleichzeitig dekorativen Zwecken aufgebracht werden. Der Einsatz funktioneller Perlglanzpigmente hat sich insbesondere im Bereich der sogenannten transparenten Wärmedämmung (TWD) von Gebäudefassaden als äußerst effektiv erwiesen.

Gegenstand der Erfindung sind ebenfalls TWD-Systeme, die farbige Absorberschichten in Kombination mit winkeiselektiv verschattenden Glasbeschichtungen enthalten.

Den erfindungsgemäßen transparenten Medien kommt insbesondere durch ihren Einsatz in der transparenten Wärmedämmung (TWD) eine erhebliche wirtschaftliche Bedeutung hinsichtlich der Energieeinsparung und damit Ressourcenschonung zu.

Die nachfolgenden Beispiele sollen die Erfindung erläutern, ohne sie zu begrenzen.

### Beispiele

### Beispiel 1

50 g Glasemail-Fritte 10049 (Glaspulver der Fa. Cerdec, BRD) und 50 g Siebdruckmedium 80863 (Bindemittel aus Hydroxypropylcelluloseether in 2-Ethoxyethanol und Ethanol) der Fa. Cerdec werden in einer Kugelmühle auf Korngrößen von 20-30 µm gemahlen.
10 g der gemahlenen Masse werden mit 2,5 g Minatec® 30 CM (leitfähiges Pigment auf Basis von TiO₂/Glimmer mit einer (Sb,Sn)-Oxid-Schicht der Fa. Merck KGaA, BRD) und zusätzlich mit 20 g Siebdruckmedium 80863 homogen vermischt. Diese siebdruckfähige Masse wird mit einem 51 T Siebdruckgewebe auf einer Glasplatte aufgedruckt. Anschließend wird die Glasplatte ca. 10-20 min bei 100-130 °C getrocknet. Die bedruckte Glasplatte wird auf einen keramischen Träger gelegt und 10 min bei 700 °C im Ofen gebrannt.
Nach beendeter Behandlung der Glasplatte wird die gerichtete hemisphärische Transmission und Reflexion unter verschiedenen Einfallswinkeln der Strahlung in Wellenlängenbereichen von 250 bis 2500 nm gemessen.

Analog Beispiel 1 werden die keramischen Träger in den Beispielen 2-6 beschichtet.

### Beispiel 2

33 % Minatec® 30CM in Cerdec-Fritte 10049
Farbenrezept:

| | |
|---|---|
| 10 g | Cerdec-Fritte 10049 / Siebdruckmedium 80683 Gew. Verhältnis 1:1 Kugelmühle gemahlen |
| 2,5 g | Minatec® 30CM |
| 20 g | Siebdruckmedium 80683 |

Aufgedruckt mit 51T Siebgewebe. Gebrannt bei 700 °C/10 Min.

### Beispiel 3

33 % Minatec® 31CM in Cerdec-Fritte 10049
Farbenrezept:

| | |
|---|---|
| 10 g | Cerdec-Fritte 10049 / Siebdruckmedium 80683 Gew. Verhältnis 1:1 Kugelmühle gemahlen |
| 2,5 g | Minatec® 31CM (elektrisch leitfähiges Pigment auf Basis von Glimmer mit einer (Sn,Sb)-Oxid-Schicht der Fa. Merck KGaA) |
| 20 g | Siebdruckmedium 80683 |

Aufgedruckt mit 51T Siebgewebe. Gebrannt bei 700 °C/10 Min.

### Beispiel 4

33 % Minatec® 40CM in Cerdec-Fritte 10049
Farbenrezept:

| | |
|---|---|
| 10 g | Cerdec-Fritte 10049 / Siebdruckmedium 80683 Gew. Verhältnis 1:1 Kugelmühle gemahlen |
| 2,5 g | Minatec® 40CM (Gemisch aus kugelförmigen (BaSO₄) und plättchenförmigen (Glimmer) Pigmenten belegt mit einer (Sn,Sb)-Oxid-Schicht) |
| 20 g | Siebdruckmedium 80683 |

Aufgedruckt mit 51T Siebgewebe. Gebrannt bei 700 °C/10 Min.

### Beispiel 5

33 % Minatec® 30CM / Iriodin® 520 (Fe₂O₃/Glimmerpigment der Fa. Merck KGaA); Verhältnis 8:2, in Cerdec-Fritte 10049
Farbenrezept:

| | |
|---|---|
| 10 g | Cerdec-Fritte 10049 / Siebdruckmedium 80683 Gew. Verhältnis 1:1 Kugelmühle gemahlen |
| 2,5 g | Minatec® 30CM / Iriodin® 520, Verhältnis 8:2 |
| 20 g | Siebdruckmedium 80683 |

Aufgedruckt mit 51T Siebgewebe. Gebrannt bei 700 °C/10 Min.

### Beispiel 6

33 % Minatec® 30CM / Iriodin® Orange Pigment, Verhältnis 8:2 in Cerdec-Fritte 10049
Farbenrezept:

| | |
|---|---|
| 10 g | Cerdec-Fritte 10049 / Siebdruckmedium 80683 Gew. Verhältnis 1:1 Kugelmühle gemahlen |
| 2,5 g | Minatec® 30CM / Iriodin® Orange Pigment (Fe₂O₃/Glimmerpigment der Fa. Merck KGaA) Verhältnis 8:2 |
| 20 g | Siebdruckmedium 80683 |

Aufgedruckt mit 51T Siebgewebe. Gebrannt bei 700 °C/10 Min.

## Patentansprüche

1. Transparentes Medium enthaltend leitfähige Perlglanzpigmente mit winkelselektiven Reflexions- bzw. Transmissionseigenschaften, **dadurch gekennzeichnet, dass** das Verhältnis aus dem solaren Transmissionsgrad im Sommer (Einfallswinkel der Sonnenstrahlung 55 bis 70°) und dem solaren Transmissionsgrad im Winter (Einfallswinkel der Sonnenstrahlung 5 bis 20°) im Bereich von 50 bis 85 % liegt.

2. Transparentes Medium nach Anspruch 1, **dadurch gekennzeichnet, dass** der Gehalt an Perlglanzpigmenten mit winkelselektiven Transmissions- und Reflexionseigenschaften 5 bis 70 Gew. % beträgt.

3. Transparentes Medium nach Anspruch 1 oder 2, **dadurch gekennzeichnet, dass** das Perlglanzpigment auf Metalloxidplättchen, Schichtsilikaten, Talkum, Kaolin, SiO₂-Plättchen oder Glas-Plättchen basiert.

4. Transparentes Medium nach einem der Ansprüche 1 bis 3, **dadurch gekennzeichnet, dass** das Perlglanzpigment eine mit Antimon, Indium, Bismut, Kupfer, Gallium, Germanium oder Fluor dotierte Zinndioxidschicht enthält.

5. Transparentes Medium nach Anspruch 4, **dadurch gekennzeichnet, dass** das Perlglanzpigment als leitfähige Schicht eine mit Antimon dotierte Zinndioxidschicht aufweist.

6. Transparentes Medium nach einem der Ansprüche 1 bis 5, **dadurch gekennzeichnet, dass** das Medium ein Lack, Wasserlack, Kunststoff, Keramik oder Glas ist.

7. Transparentes Medium nach einem der Ansprüche 1 bis 6, **dadurch gekennzeichnet, dass** es nachträglich geprägt bzw. strukturiert wird.

8. Verwendung des transparenten Mediums nach Anspruch 1 zur Beschichtung von Gläsern, Keramiken, z. B. für Module der "Transparenten Wärmedämmung", Aluminiumblechen, Stahlblechen, Prägefolien und zur Fassadengestaltung.

9. Transparente Wärmedämm-Systeme bestehend aus farbigen Absorberschichten in Kombination mit winkelselektiv verschattenden Glasbeschichtungen, **dadurch gekennzeichnet, dass** das Glas mit einem transparentem Medium nach Anspruch 1 beschichtet ist.

## Claims

1. Transparent medium comprising conductive pearlescent pigments having angle-selective reflection and/or transmission properties, **characterised in that** the ratio of the degree of solar transmission in summer (angle of incidence of solar radiation from 55 to 70°) and the degree of solar transmission in winter (angle of incidence of solar radiation from 5 to 20°) is in the range from 50 to 85%.

2. Transparent medium according to Claim 1, **characterised in that** the content of pearlescent pigments having angle-selective transmission and reflection properties is from 5 to 70% by weight.

3. Transparent medium according to Claim 1 or 2, **characterised in that** the pearlescent pigment is based on metal-oxide platelets, phyllo-silicates, talc, kaolin, SiO₂ platelets or glass platelets.

4. Transparent medium according to one of Claims 1 to 3, **characterised in that** the pearlescent pigment comprises a tin dioxide layer doped with antimony, indium, bismuth, copper, gallium, germanium or fluorine.

5. Transparent medium according to Claim 4, **characterised in that** the pearlescent pigment has, as conductive layer, an antimony-doped tin dioxide layer.

6. Transparent medium according to one of Claims 1 to 5, **characterised in that** the medium is a surface coating, water-borne coating, plastic, ceramic or glass.

7. Transparent medium according to one of Claims 1 to 6, **characterised in that** it is subsequently embossed or structured.

8. Use of the transparent medium according to Claim 1 for the coating of glasses, ceramics, for example for modules in "transparent thermal insulation", aluminium sheets, steel sheets, embossing films and for building wall design.

9. Transparent thermal insulation systems consisting of coloured absorber layers in combination with glass coatings which provide angle-selective shading, **characterised in that** the glass is coated with a transparent medium according to Claim 1.

## Revendications

1. Milieu transparent contenant des pigments nacrés conducteurs ayant des propriétés de réflexion ou de transmission sélectives en fonction de l'angle, **caractérisé en ce que** le rapport entre le degré de transmission solaire en été (angle d'incidence du rayonnement solaire de 55 à 70°) et le degré de transmission solaire en hiver (angle d'incidence du rayonnement solaire de 5 à 20°) se situe dans la plage de 50 à 85%.

2. Milieu transparent selon la revendication 1, **caractérisé en ce que** la teneur en pigments nacrés ayant des propriétés de réflexion ou de transmission sélectives en fonction de l'angle est de 5 à 70% en poids.

3. Milieu transparent selon la revendication 1 ou la revendication 2, **caractérisé en ce que** le pigment nacré est à base de plaquettes d'oxyde métallique, de silicates stratifiée, de talc, de kaolin, de plaquettes de SiO₂ ou de plaquettes de verre.

4. Milieu transparent selon l'une des revendications 1 à 3, **caractérisé en ce que** le pigment nacré contient une couche de dioxyde d'étain dopée avec de l'antimoine, de l'indium, du bismuth, du cuivre, du gallium, du germanium ou du fluor.

5. Milieu transparent selon la revendication 4, **caractérisé en ce que** le pigment nacré présente en tant que couche conductrice une couche de dioxyde d'étain dopée avec de l'antimoine.

6. Milieu transparent selon l'uns des revendications 1 à 5, **caractérisé en ce que** le milieu est une laque, une laque à l'eau, une matière plastique, une céramique ou un verre.

7. Milieu transparent selon l'une des revendicatiens 1 à 6, **caractérisé en ce qu'**il est ensuite soumis à un marquage ou à une structuration.

8. Utilisation du milieu transparent selon la revendication 1 pour le revêtement de verres, de céramiques, par exemple pour des modules "d'isolation thermique transparente", de tôles d'aluminium, de tôles d'acier, de films de marquage et pour la réalisation de façades.

9. Système d'isolation thermique transparent, composé de couches absorbantes colorées en combinaison avec des revêtements en verre ayant un effet d'ombrage sélectif en fonction de l'angle, **caractérisé en ce que** le verre est revêtu avec un milieu transparent selon la revendication 1.
